(19) Europäisches Patentamt
European Patent Office
Office européen des brevets

(11) EP 3 001 905 B1

(12) # EUROPÄISCHE PATENTSCHRIFT

(45) Veröffentlichungstag und Bekanntmachung des Hinweises auf die Patenterteilung:
**01.11.2017 Patentblatt 2017/44**

(21) Anmeldenummer: **15184181.4**

(22) Anmeldetag: **05.06.2007**

(51) Int Cl.:
***A01N 63/00*** *(2006.01)*
***A01N 43/90*** *(2006.01)*
***A01N 43/36*** *(2006.01)*
*A01K 67/033* *(2006.01)*
***A01N 47/06*** *(2006.01)*
***A01N 43/38*** *(2006.01)*
***A01P 7/00*** *(2006.01)*

(54) **WIRKSTOFFKOMBINATIONEN MIT INSEKTIZIDEN UND AKARIZIDEN EIGENSCHAFTEN**
ACTIVE AGENT COMBINATIONS WITH INSECTICIDES AND ACARICIDE PROPERTIES
COMBINAISONS D'AGENTS ACTIFS A PROPRIETES INSECTICIDES ET ACARICIDES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.06.2006 DE 102006027731**

(43) Veröffentlichungstag der Anmeldung:
**06.04.2016 Patentblatt 2016/14**

(62) Dokumentnummer(n) der früheren Anmeldung(en) nach Art. 76 EPÜ:
**07725831.7 / 2 040 553**

(73) Patentinhaber: **Bayer Intellectual Property GmbH**
**40789 Monheim am Rhein (DE)**

(72) Erfinder:
- **FISCHER, Reiner, Dr.**
  **40789 Monheim (DE)**
- **HUNGENBERG, Heike**
  **40764 Langenfeld (DE)**
- **NAUEN, Ralf, Dr.**
  **40764 Langenfeld (DE)**
- **SCHNORBACH, Hans-Jürgen, Dr.**
  **40789 Monheim (DE)**
- **THIELERT, Wolfgang, Dr.**
  **51519 Odenthal (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**DE-A1- 10 231 333 US-A- 6 110 872**

- **L. DE MAEYER, H. W. SCHMIDT & D. PEETERS: "Envidor - a new acaricide for IPM in pomefruit orchards", PFLANZENSCHUTZ-NACHRICHTEN BAYER, Bd. 55, Nr. 2-3, 2002, Seiten 211-236, XP002456474,**
- **J. IZQUIERDO, V. MANSANET, J. V. SANZ & J. M. PUIGGROS: "Development of Envidor for the control of spider mites in Spanish citrus production", PFLANZENSCHUTZ-NACHRICHTEN BAYER, Bd. 55, Nr. 2-3, 2002, Seiten 255-266, XP002456475,**
- **A. ELBERT, E. BRÜCK, J. MELGAREJO, H.-J. SCHNORBACH & S. SONE: "Field development of Oberon for whitefly and mite control in vegetables, cotton, corn, strawberries, ornamentals and tea", PFLANZENSCHUTZ-NACHRICHTEN BAYER, Bd. 58, Nr. 3, 2005, Seiten 441-468, XP002456476,**
- **J. M. HARDMAN, J. L. FRANKLIN, D. L. MOREAU & N. J. BOSTANIAN: "An index for selective toxicity of miticides to phytophagous mites and their predators based on orchard trials", PEST MANAGEMENT SCIENCE, Bd. 59, 2003, Seiten 1321-1332, XP002456477,**
- **V JHANSI LAKSHMI, N. V. KRISHNAIAH & I. C. PASALU: "Relative safety of selected acaricides to three hemipteran natural enemies of planthoppers in rice ecosystem", J. BIOL. CONTROL, Bd. 20, Nr. 2, 2006, Seiten 141-146, XP009091414,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **Raymond A Cloyd ET AL: "Compatibility of Three Miticides with the Predatory Mites Neoseiulus californicus McGregor and Phytoseiulus persimilis Athias-Henriot (Acari: Phytoseiidae)", Horticultural Sciences, 1. Juni 2006 (2006-06-01), Seiten 707-710, XP55075591, Gefunden im Internet: URL:http://hortsci.ashspublications.org/content/41/3/707.full.pdf [gefunden am 2013-08-19]**
- **JAVIER SÁENZ-DE-CABEZÓN IRIGARAY F ET AL: "Side Effects of Five New Acaricides on the Predator Galendromus occidentalis (Acari, Phytoseiidae)", EXPERIMENTAL AND APPLIED ACAROLOGY, KLUWER ACADEMIC PUBLISHERS, DO, Bd. 38, Nr. 4, 1. April 2006 (2006-04-01), Seiten 299-305, XP019229266, ISSN: 1572-9702, DOI: 10.1007/S10493-006-0017-Z**
- **"The savvy growers cutting edge - ohp newsletter", , 1. Juli 2014 (2014-07-01), Seiten 1-6, XP55243585, U.S.A. Gefunden im Internet: URL:http://www.ohp.com/Newsletter/pdf/OHP_Newsletter_Summer14.pdf [gefunden am 2016-01-21]**


Bemerkungen:

Die Akte enthält technische Angaben, die nach dem Eingang der Anmeldung eingereicht wurden und die nicht in dieser Patentschrift enthalten sind.

## Beschreibung

Die vorliegende Erfindung betrifft neue Wirkstoffkombinationen, die aus bekannten cyclischen Ketoenole einerseits und Nützlingen (natürliche Feinde) andererseits bestehen und sehr gut zur Bekämpfung von tierischen Schädlingen wie Insekten und/oder unerwünschten Akariden geeignet sind.

Es ist bereits bekannt, dass bestimmte cyclische Ketoenole herbizide, insektizide und akarizide Eigenschaften besitzen. Die Wirksamkeit dieser Stoffe ist gut, lässt aber bei niedrigen Aufwandmengen in manchen Fällen zu wünschen übrig.

Bekannt mit herbizider, insektizider oder akarizider Wirkung sind unsubstituierte, bicyclische 3-Aryl-pyrrolidin-2,4-dion-Derivate (EP-A-355 599 und EP-A-415 211) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie Tetramsäurederivate aus EP-A-456 063, EP-A-521 334, EP-A-596 298, EP-A-613 884, WO 95/01 997, WO 95/26 954, WO 95/20 572, EP-A-0 668 267, WO 96/25 395, WO 96/35 664, WO 97/01 535, WO 97/02 243, WO 97/36 868, WO 97/ 43 275, WO 98/05 638, WO 98/06 721, WO 98/25 928, WO 99/16 748, WO 99/24 437, WO 99/43 649, WO 99/48 869, WO 99/55 673, WO 01/09 092, WO 91/17 972, WO 01/23 354, WO 01/74 770, WO 03/013 249, WO 2004/007 448, WO 2004/024 688, WO 04/065 366, WO 04/080 962, WO 04/111 042, WO 05/044 791, WO 05/044 796, WO 05/048 710, WO 05/049 596, WO 05/066 125, WO 05/092 897, WO 06/000 355, WO 06/029799, WO 06/056281, WO 06/056282, WO 06/089633 und DE-A-05 05 1325.

Weiterhin ist schon bekannt, dass zahlreiche Nützlinge zur Bekämpfung von Insekten und Spinnmilben eingesetzt werden "Knowing and recognizing; M.H. Malais, W.J. Ravensberg publiziert von Koppert B.V., Reed Business Information (2003). Allerdings ist der Einsatz von Nützlingen allein nicht immer befriedigend.

Die Verwendung von Spirodiclofen im sogenannten integrierten Pflanzenschutz wird beschrieben in Pflanzenschutznachrichten Bayer, Bd. 55, Nr. 2-3, 2002, Seiten 211-236.

In Pflanzenschutznachrichten Bayer, Bd. 55, Nr. 2-3, 2002, Seiten 255-266 wird die Verwendung von Spirodiclofen in Kombinatioan mit Rodolia cardinalis und den Raubmilben Euseius stipulatus und Amblyseius californicus beschrieben.

In Pflanzenschutznachrichten Bayer, Bd. 58, Nr. 3, 2005, Seiten 441-468 wird die Verwendung von Spiromesifen in Kombination mit Encarsia formosa, Aphidius rhopalosiphi, Coccinella spp., Maccrolophus caliginosus, Nesidiocoris tenuis, Orius spp. und Phytoseiulus spp. beschrieben.

Die Verwendung von Spirodiclofen in Kombination mit den Raubmilben Typhlodromus pyri oder Zetzellia mali wird in Pest Management Science, Bd. 59, 203, Seiten 1321-1332 beschrieben.

Horticultural Sciences, (2006-06-01), Seiten 707-710 offenbart, dass Spiromesifen mit Neoseiulus californicus kompatibel ist, allerdings eine Toxizität gegenüber Phytoseiulus persimilis aufweist. Experimental and Applied Acarology, Kluwer Academic Publishers, DO, Bd. 38, Nr. 4, (2006-04-01), Seiten 299-305 offenbart die Kombination von Spiromesifen mit dem Nützling Galendromus occidentalis.

Es wurde nun gefunden, dass Verbindungen der Formel (1-4)

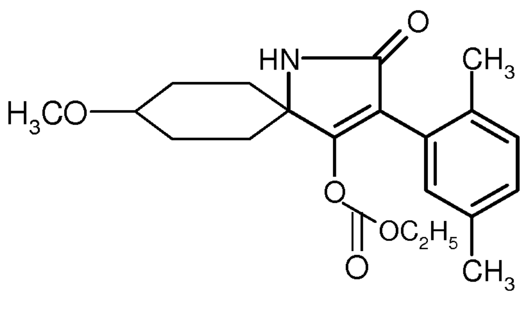

(I-4)

in Kombination mit Nützlingen aus der Familie der Raubmilben (Phytoseidae) sehr gute insektizide und/oder akarizide Eigenschaften besitzen.

Überraschenderweise ist die insektizide und/oder akarizide Wirkung der erfindungsgemäßen Wirkstoff-Nützling-Kombinationen besser als die Wirkungen des einzelnen Wirkstoffs und der Nützlinge alleine. Es liegt eine nicht vorhersehbare Wirksamkeitssteigerung vor.

Weiterhin wurde gefunden, dass sich mit den erfindungsgemäßen Wirkstoff-Nützlings-Kombinationen Anwendungen von toxikologisch und/oder ökologisch ungünstigeren Wirkstoffen unter Erhalt einer vergleichbaren Wirkung ersetzen lassen, welches vor allem der Sicherheit der Anwender und/oder der Umwelt zugute kommt. Außerdem wurde gefunden, dass sich Spritzfolgen einsparen lassen.

Die erfindungsgemäßen Wirkstoff-Nützlings-Kombinationen enthalten neben mindestens einem Wirkstoff der Formel (I) mindestens einen Nützling aus den zuvor genannten Ordnungen bzw. Unterordnungen.

Hervorgehoben sind Kombinationen mit Nützlingen aus der Familie der Raubmilben (Phytoseidae) und dem cis-Isomeren der Formel (I-4')

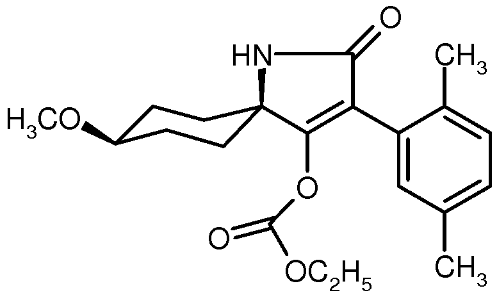

(I-4')

Die Wirkstoff-Nützlings-Kombinationen können darüber hinaus auch weitere geeignete fungizid, akarizid oder insektizid wirksame Zumischkomponenten enthalten.

Die Verbindungen der Formel (I) sind bekannte Verbindungen, deren Herstellung in den Patenten/Patentanmeldungen, die auf Seite 1 zitiert sind, beschrieben sind (siehe vor allem WO 97/01 535, WO 97/36 868, WO 98/05 638, WO 04/007 448).

Bevorzugt einsetzbar sind Nützlinge aus den Familien der Phytoseidae in einjährigen Kulturen wie z.B. Gemüse, Melonen, Zierpflanzen, Mais aber auch in mehrjährigen Pflanzen, wie z.B. Zitrus, Kern- und Steinobst, Gewürze, Coniferen und andere Zierpflanzen sowie im Forst.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken;

aber auch Blattgemüse, beispielsweise Kopfsalat, Chicoree, Endivien, Kressen, Rauken, Feldsalat, Eisbergsalat, Lauch, Spinat, Mangold;

weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;

ferner Kohlgemüse, wie Blumenkohl, Broccoli, Kohlrabi, Rotkohl, Weißkohl, Grünkohl, Wirsing, Rosenkohl, Chinakohl.

Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;

aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;

weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven, außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse, darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amarillis, Dahlien, Azaleen, Malven,

aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien, ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Besonders bevorzugt sind aus der Familie der Raubmilben (Phytoseidae): Amblyseius spp., Thyphlodromus spp., Phytoseiulus spp., in Kulturen wie Kernobst, Steinobst, Gemüse, Zierpflanzen und Gewürze.

Die erfindungsgemäßen Wirkstoff-Nützlings-Kombinationen eignen sich zur Bekämpfung von tierischen Schädlingen, vorzugsweise Arthropoden und Nematoden, insbesondere Insekten und/oder Spinnentieren, die im Wein- und

Obstbau, in der Land- und Gartenwirtschaft und in Forsten vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp.

Aus der Ordnung der Phthiraptera z.B. Pediculus humanus corporis, Haematopinus spp., Linognathus spp., Trichodectes spp., Damalinia spp.

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im Wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannte Formulierung kann in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Erfindungsgemäß können alle Planzen und Pflanzenteile behandelt werden. Unter Pflanzen werden hierbei

alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Wirkstoff-Nützlings-Kombinationen behandelt werden. Die bei den Kombinationen oben angegebenen Vorzugsbereiche gelten auch für die Behandlung dieser Pflanzen. Besonders hervorgehoben sei die Pflanzenbehandlung mit den im vorliegenden Text speziell aufgeführten Wirkstoff-Nützlings-Kombinationen.
Die gute insektizide und/oder akarizide Wirkung der erfindungsgemäßen Wirkstoff-Nützlings-Kombinationen geht aus den nachfolgenden Beispielen hervor. Während die einzelnen Wirkstoffe in der Wirkung Schwächen aufweisen, zeigen die Wirkstoff-Nützlings-Kombinationen eine Wirkung, die über die einfache Wirkstoffwirkung hinausgeht.

**Berechnungsformel für den Abtötungsgrad einer Kombination aus zwei Wirkstoffen**

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Abtötungsgrad, ausgedrücht in % der unbehandelten Kontrolle, beim Einsatz des Wirk-stoffes A in einer Aufwandmenge von m ppm oder g/ha,

Y den Abtötungsgrad, ausgedrückt in % der unbehandelten Kontrolle, beim Einsatz des Wirk-stoffes B in einer Aufwandmenge von n ppm oder g/ha,

E den Abtötungsgrad, ausgedrückt in % der unbehandelten Kontrolle, beim Einsatz des Wirk-stoffes A und B in Aufwandmengen von m und n ppm oder g/ha bedeutet,

dann ist

$$E = X + Y - \frac{X \times Y}{100}$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

**Anwendungsbeispiele**

Beispiel A (nicht erfindungsgemäss)

**Bemisia tabaci -Test**

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Baumwollblätter (*Gossypium hirsutum*), die mit der Weißen Fliege (*Bemisia tabacii*) befallen sind, werden durch Spritzen mit der Wirkstoffzubereitung in der gewünschten Konzentration behandelt. Die Raubwanzen (*Macrolophus caliginosus*) werden nach der gewünschten Zeit in definierter Menge zu gegeben.
Nach der gewünschten Zeit wird die Abtötung des Schädlings in % bestimmt. Dabei bedeutet 100 %, dass alle Weißen Fliegen abgetötet wurden; 0 % bedeutet, dass keine Weiße Fliegen abgetötet wurden. Die ermittelten Abtötungswerte verrechnet man nach der Colby-Formel.

Bei diesem Test zeigt z. B. die folgende Wirkstoff - Raubwanzen - Kombination gemäß vorliegender Anmeldung eine synergistisch verstärkte Wirksamkeit im Vergleich zu den einzeln angewendeten Komponenten:

Tabelle A

Pflanzenschädigende Insekten

**Bemisia tabaci - test**

| Wirkstoff | Konzentration in ppm bzw. Anzahl Tiere | Abtötung in % nach 14^d | |
|---|---|---|---|
| **Bsp. 1-4'** | | | |
| | 0,16 | | 0 |
| **Macrolophus caliginosus** | | | |
| | 5 | | 18,2 |
| **Bsp. I-4' + Macrolophus caliginosus** | | | |
| | 0,16 + 5 Tiere | gef.* | ber.** |
| | | 72,7 | 18,2 |

* gef. = gefundene Wirkung
** ber. = nach der Colby-Formel berechnete Wirkung

Beispiel B (nicht erfindungsgemäss)

**Myzus persicae -Test**

| | |
|---|---|
| Lösungsmittel: | 7 Gewichtsteile Dimethylformamid |
| Emulgator: | 2 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*), die mit der Grünen Pfirsichblattlaus (*Myzus persicae*) befallen sind, werden durch Spritzen mit der Wirkstoffzubereitung in der gewünschten Konzentration behandelt.

Die Marienkäferlarven (*Coccinella septempunctata*) werden nach der gewünschten Zeit in definierter Menge zugefügt.

Nach der gewünschten Zeit wird die Abtötung des Schädlings in % bestimmt. Dabei bedeutet 100 %, dass alle Blattläuse abgetötet wurden; 0 % bedeutet, dass keine Blattläuse abgetötet wurden.

Die ermittelten Abtötungswerte verrechnet man nach der Colby-Formel.

Bei diesem Test zeigt z. B. die folgende Wirkstoff - Nützling - Kombination gemäß vorliegender Anmeldung eine synergistisch verstärkte Wirksamkeit im Vergleich zu den einzeln angewendeten Komponenten:

Tabelle B

Pflanzenschädigende Insekten

**Myzus persicae - Test**

| Wirkstoff | Konzentration in ppm bzw. Anzahl Tiere | Abtötung in % nach 7^d | |
|---|---|---|---|
| **Bsp. 1-4'** | | | |
| | 4 | | 10 |
| **Coccinella septempunctata** | | | |
| | 1 | | 10 |
| **Bsp. I-4' + Coccinella septempunctata** | | | |
| | 4 + 1 Tier | gef.* | ber.** |
| | | 70 | 19 |

* gef. = gefundene Wirkung
** ber. = nach der Colby-Formel berechnete Wirkung

Beispiel C (nicht erfindungsgemäss)

Je drei etwa 25 Jahre alte Apfelbäume (ca. 2m Kronenhöhe) der Sorte "Elan" werden in 3 Replikationen gegen Blutläuse, Eriosoma lanigerum, behandelt. Dabei wird der Wirkstoff (1-4') (150OD) und der kommerzielle Standard Clothianidin (WG 50) in den angegebenen Aufwandmengen in Gegenwart der Blattlauszehrwespe (Nützling) Aphelinus mali vergleichend geprüft. Die Anwendung erfolgt mit einem Zerstäubergerät (Atomizer) mit einer Wasseraufwandmenge von 500 1/ha. Es werden sowohl nur eine, als auch zwei Anwendungen im Abstand von 34 Tagen durchgeführt.

Die Auswertung erfolgt 7, 30, 44, 52, 59, 66 und 73 Tage nach der 1. Behandlung, indem man die Abtötung der adulten Schädlinge und die Anzahl der parasitierten Schädlinge an je 10 Kolonien nach Abbott auswertet. Dabei wird der Wirkstoff (1-4') nach nur einer Behandlung mit dem Standard nach zwei Behandlungen verglichen, da der Wirkstoff (1-4') nach zwei Behandlungen 100 % Wirkung zeigt und somit keine Nahrung (Beute) für den Nützling vorhanden war.

| Aufwandmenge g/ha/m Kronenhöhe | Wirkung (% Abbott) Eriosoma lanigerum | | | | | | |
|---|---|---|---|---|---|---|---|
| | 7 d | 30 d | 44 d | 52 d | 59 d | 66 d | 73 d |
| Clothianidin 37,5 | 71 | 76 | 85 | 81,8 | 81,8 | 80 | 80 |
| (I-4') 75 | 48 | 95 | 99 | 99,4 | 98,2 | 98 | 98 |
| Kontrolle Wasser | 0 | 0 | 0 | 0 | 0 | 0 | 0 |

| Aufwandmenge g/ha/m Kronenhöhe | Parasitierung durch Nützlinge (%) Aphelinus mali | | | | | | |
|---|---|---|---|---|---|---|---|
| | 7 d | 30 d | 44 d | 52 d | 59 d | 66 d | 73 d |
| Clothianidin 37,5 | 0 | 0 | 0 | 1 | 10 | 24 | 50 |
| (I-4') 75 | 0 | 0 | 0 | - | 35 | 54 | 90 |
| Kontrolle Wasser | 0 | 0 | 1 | 3 | 51 | 75 | 97 |

Ca. 3m hohe Birnenbäume der Sorte "Conference" werden in 4 Replikationen gegen Birnensauger, Psylla piri, behandelt. Dabei wird der Wirkstoff (1-4') (100OD) und der kommerzielle Standard Amitraz (UL 400) in den angegebenen Aufwandmengen angewendet. Die Anwendung erfolgt mit einem Rückenspritzgerät, wobei 1000 l/ha Wasser ausgebracht werden. Der Nützling Anthocoris nemoralis tritt 14 Tage nach der Behandlung auf

Die Auswertung erfolgt 4,8 und 14 Tage nach der Behandlung indem man die Abtötung der L-1-Nymphen und der L-4-Nymphen an den Zweigen auswertet.

| Aufwandmenge g/ha/m Kronenhöhe | Wirkung (% Abbott) Psylla piri | | | | | | Anzahl Anthocoris nemoralis | | |
|---|---|---|---|---|---|---|---|---|---|
| | L-1 | L-4 | L-1 | L-4 | L-1 | L-4 | | | |
| | 4 d | 4 d | 8 d | 8 d | 14 d | 14 d | 4d | 8d | 14d |
| Amitraz 400 | 23,6 | 0,0 | 41,0 | 44,6 | 41,8 | 44,4 | | | 5 |
| (I-4') 75 | 62,7 | 91,4 | 69,5 | 98,4 | 76,6 | 99,3 | | | 12 |
| Kontrolle | | | | | | | 0 | 0 | 15 |

Beispiel D (nicht erfindungsgemäss)

**Grenzkonzentrations-Test / Bodeninsekten - Behandlung transgener Pflanzen**

| | |
|---|---|
| Testinsekt: | **Diabrotica balteata - Larven im Boden** |
| Lösungsmittel: | 7 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird auf den Boden gegossen. Dabei spielt die Konzentration des Wirkstoffs in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,251 Töpfe und lässt diese bei 20°C stehen.

Sofort nach dem Ansatz werden je Topf 5 vorgekeimte Maiskörner der Sorte YIELD GUARD (Warenzeichen von Monsanto Comp., USA) gelegt. Nach 2 Tagen werden in den behandelten Boden die entsprechenden Testinsekten gesetzt. Nach weiteren 7 Tagen wird der Wirkungsgrad des Wirkstoffs durch Auszählen der aufgelaufenen Maispflanzen bestimmt (1 Pflanze = 20 % Wirkung).

Beispiel E (nicht erfindungsgemäss)

**Heliothis virescens - Test - Behandlung transgener Pflanzen**

| | |
|---|---|
| Lösungsmittel: | 7 Gewichtsteile Aceton |
| Emulgator : | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Sojatriebe (Glycine max) der Sorte Roundup Ready (Warenzeichen der Monsanto Comp. USA) werden durch Tauchen in die Wirkstoffzubereitung der gewünschten Konzentration behandelt und mit der Tabakknospenraupe Heliothis virescens besetzt, solange die Blätter noch feucht sind.

Nach der gewünschten Zeit wird die Abtötung der Insekten bestimmt.

**Patentansprüche**

1. Verwendung der Verbindung der Formel (1-4)

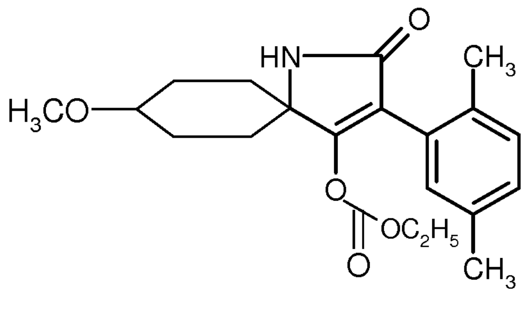

(I-4)

in Kombination mit Nützlingen aus der Familie der Raubmilben (Phytoseidae) zur Bekämpfung tierischer Schädlinge.

2. Verwendung gemäß Anspruch 1, wobei die Verbindung die folgende Struktur hat

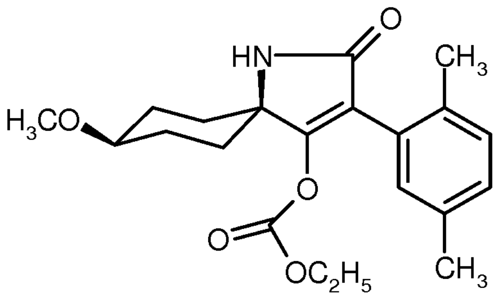

(I-4')

3. Verwendung der Verbindung der Formel (1-4) gemäß Anspruch 1 oder der Verbindung der Formel (I-4') gemäß Anspruch 2 in Kombination mit Amblyseius spp., Thyphlodromus spp., Phytoseiulus spp..

4. Verfahren zur Bekämpfung tierischer Schädlinge, **dadurch gekennzeichnet, dass** man die Verbindung der Formel (1-4) gemäß Anspruch 1 oder die Verbindung der Formel (I-4') gemäß Anspruch 2 und Nützlinge, wie in Anspruch 1 definiert, auf tierische Schädlinge und/oder deren Lebensraum einwirken lässt.

5. Verfahren zur Reduktion von Spritzfolgen (Anzahl der Anwendungen pro Saison) durch den Einsatz der Verbindung der Formel (1-4) gemäß Anspruch 1 oder der Verbindung der Formel (I-4') gemäß Anspruch 2 und Nützlingen gemäß Anspruch 1.

6. Verfahren zur Verminderung der Gesamtrückstände an Insektiziden und/oder Akariziden auf dem Erntegut und in der Umwelt durch den Einsatz der Verbindung der Formel (1-4) gemäß Anspruch 1 oder der Verbindung der Formel (I-4') gemäß Anspruch 2 und Nützlingen gemäß Anspruch 1.

## Claims

1. Use of a compound of the formula (I-4)

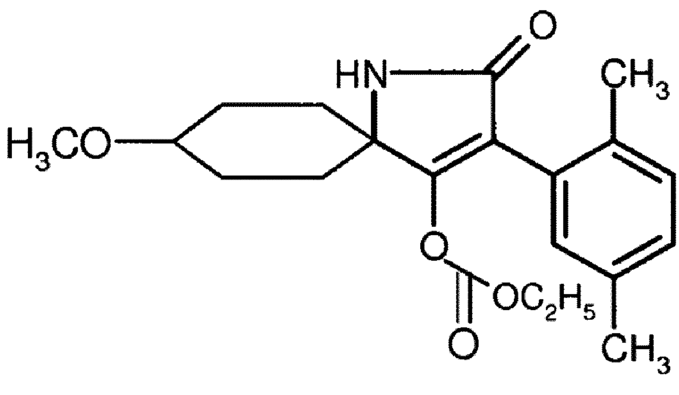

(I-4)

in combination with beneficial species from the family of the predatory mites (Phytoseidae) for controlling animal pests.

2. Use according to Claim 1, wherein the compound has the following structure

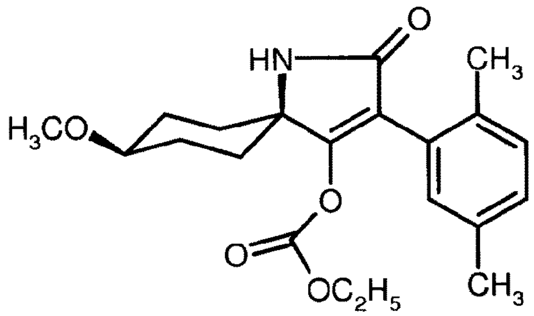

(I-4')

3. Use of the compound of the formula (I-4) according to Claim 1 or of the Compound of the formula (I-4') according to Claim 2 in combination with Amblyseius spp., Thyphlodromus spp., Phytoseiulus spp.

4. Method for controlling animal pests, **characterized in that** the compound of the formula (I-4) according to Claim 1 or the compound of the formula (I-4') according to Claim 2 and beneficial species as defined in Claim 1 are allowed to act on animal pests and/or their habitat.

5. Method for reducing spraying sequences (the number of applications per season) by using the compound of the formula (I-4) according to Claim 1 or the compound of the formula (I-4') according to Claim 2 and beneficial species according to Claim 1.

6. Method for reducing the total number of insecticide and/or acaricide residues on the harvested material and in the environment by using the compound of the formula (I-4) according to Claim 1 or the compound of the formula (I-4') according to Claim 2 and beneficial species according to Claim 1.

**Revendications**

1. Utilisation du composé de formule (I-4)

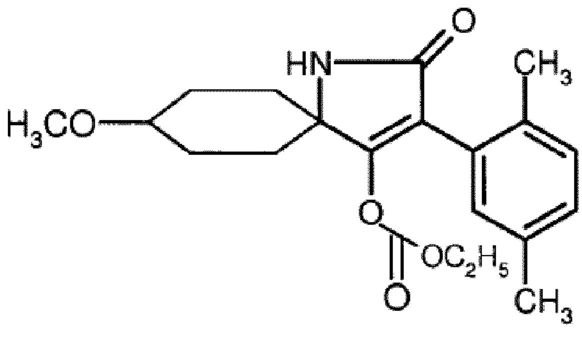

(I-4)

en combinaison avec des organismes utiles de la famille des acariens prédateurs (Phytoseidae) pour lutter contre des animaux nuisibles.

2. Utilisation selon la revendication 1, le composé ayant la structure suivante

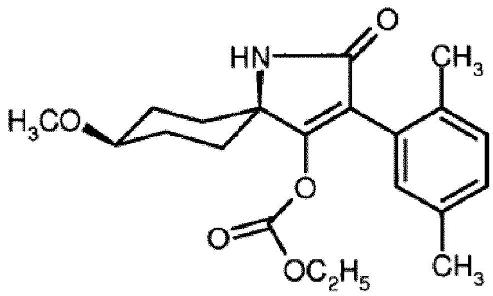

(I-4')

**3.** Utilisation du composé de formule (I-4) selon la revendication 1 ou du compose de formule (I-4') selon la revendication 2 en combinaison avec Amblyseius spp., Thyphlodromus spp., Phytoseiulus spp.

**4.** Procédé de lutte contre des animaux nuisibles, **caractérisé en ce que** le composé de formule (I-4) selon la revendication 1 ou le composé de formule (I-4') selon la revendication 2 et des organismes utiles tels que définis dans la revendication 1 sont laissés agir sur des animaux nuisibles et/ou leur habitat.

**5.** Procédé de réduction des séquences de pulvérisation (nombre d'applications par saison) par l'utilisation du composé de formule (I-4) selon la revendication 1 ou du composé de formule (I-4') selon la revendication 2 et d'organismes utiles selon la revendication 1.

**6.** Procédé de réduction des résidus totaux d'insecticides et/ou d'acaricides sur le matériel de récolte et dans l'environnement par l'utilisation du composé de formule (I-4) selon la revendication 1 ou du composé de formule (I-4') selon la revendication 2 et d'organismes utiles selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 355599 A
- EP 415211 A
- EP 377893 A
- EP 442077 A
- EP 442073 A
- EP 456063 A
- EP 521334 A
- EP 596298 A
- EP 613884 A
- WO 9501997 A
- WO 9526954 A
- WO 9520572 A
- EP 0668267 A
- WO 9625395 A
- WO 9635664 A
- WO 9701535 A
- WO 9702243 A
- WO 9736868 A
- WO 9743275 A
- WO 9805638 A
- WO 9806721 A
- WO 9825928 A
- WO 9916748 A
- WO 9924437 A
- WO 9943649 A
- WO 9948869 A
- WO 9955673 A
- WO 0109092 A
- WO 9117972 A
- WO 0123354 A
- WO 0174770 A
- WO 03013249 A
- WO 2004007448 A
- WO 2004024688 A
- WO 04065366 A
- WO 04080962 A
- WO 04111042 A
- WO 05044791 A
- WO 05044796 A
- WO 05048710 A
- WO 05049596 A
- WO 05066125 A
- WO 05092897 A
- WO 06000355 A
- WO 06029799 A
- WO 06056281 A
- WO 06056282 A
- WO 06089633 A
- DE 05051325 A
- WO 04007448 A


### In der Beschreibung aufgeführte Nicht-Patentliteratur


- **M.H. MALAIS ; W.J. RAVENSBERG.** Knowing and recognizing. Reed Business Information, 2003
- *Pflanzenschutznachrichten Bayer,* 2002, vol. 55 (2-3), 211-236
- *Pflanzenschutznachrichten Bayer,* 2002, vol. 55 (2-3), 255-266
- *Pflanzenschutznachrichten Bayer,* 2005, vol. 58 (3), 441-468
- *Pest Management Science,* vol. 59 (203), 1321-1332
- *Horticultural Sciences,* 01. Juni 2006, 707-710
- Experimental and Applied Acarology. Kluwer Academic Publishers, 01. April 2006, vol. 38, 299-305
- **COLBY, S.R.** Calculating Synergistic and Antagonistic Responses of Herbicide Combinations. *Weeds,* 1967, vol. 15, 20-22